# EUROPÄISCHE PATENTSCHRIFT

(11) **EP 3 380 351 B1**
(45) Veröffentlichungstag und Bekanntmachung des Hinweises auf die Patenterteilung: **01.01.2020**
(21) Anmeldenummer: 16801433.0
(22) Anmeldetag: 23.11.2016
(51) Int. Cl.: B60J 10/18

(54) **VERSTÄRKUNGSPROFIL**
REINFORCING PROFILE
PROFIL DE RENFORT

(30) Priorität: 25.11.2015 DE 102015120415
(43) Veröffentlichungstag der Anmeldung: 03.10.2018
(73) Patentinhaber: CQLT SaarGummi Technologies S.à.r.l., 5544 Remich (LU)
(72) Erfinder: TESSIER, Bernard, 45270 Moulon (FR); PETRY, David, 66839 Schmelz (DE)
(74) Vertreter: Patentanwälte Bernhardt / Wolff Partnerschaft mbB
(86) Internationale Anmeldenummer: PCT/EP2016/078518
(87) Internationale Veröffentlichungsnummer: WO 2017/089373

(56) Entgegenhaltungen:
- DE-A1- 19 725 166
- DE-U1-202005 002 832
- US-A1- 2001 024 732
- US-A1- 2005 144 849

## Beschreibung

Die Erfindung betrifft ein Verstärkungsprofil zur Einbettung in einen Elastomerstrang, insbesondere Dichtungs- oder Kantenschutzstrang, wobei das Verstärkungsprofil durch einen unter Aufweitung regelmäßig wiederkehrender Einschnitte gestreckten und unter Profilierung und Einbringung von Sicken umgeformten Blechstreifen gebildet ist. Ferner betrifft die Erfindung ein Verfahren zur Herstellung eines solchen Verstärkungsprofils.

Ein Verstärkungsprofil der obengenannten Art geht aus der DE 197 25 166 A1 hervor. Durch symmetrisch zu einer Längsmittelachse des Blechstreifens gebildete Randeinschnitte sind an Basisschenkeln miteinander verbundene U-förmige Abschnitte gebildet. Jeder der U-förmigen Abschnitte weist eine sich durch einen Einschnitt gebildete Öffnung auf, die sich über den Basisschenkel bis weit in die U-Schenkel des U-förmigen Abschnitts hinein erstreckt. Zu beiden Seiten der länglichen Öffnung sind in jedem der U-förmigen Abschnitte Sicken gebildet. Durch die Sicken ist es möglich, das Verstärkungsprofil bei gleichbleibender Steifigkeit der U-förmigen Abschnitte und Beibehaltung der Biegeflexibilität des Profils n seiner Gesamtheit aus dünnerem Blechmaterial herzustellen und damit Material und Gewicht einzusparen.

Durch die Erfindung wird ein neues Verstärkungsprofil der obengenannten Art geschaffen, dass dadurch gekennzeichnet ist, dass durch die Aufweitung der Einschnitte gebildete, einen geschlossenen Rand aufweisende Öffnungen jeweils vollständig durch Sicken eingeschlossen sind.

Durch den erfindungsgemäß vollständigen Einschluss der Öffnungen durch Sicken, lässt sich die Steifigkeit das Verstärkungsprofil bildender Glieder wesentlich erhöhen, während das Profil als Ganzes seine Biegeflexibilität behält.

Vorzugsweise sind die rundum geschlossenen Öffnungen jeweils in einem Basisschenkel U-förmiger, durch aufgeweitete Randeinschnitte getrennter Abschnitte des Verstärkungsprofils gebildet, wobei die U-förmigen Abschnitte vorzugsweise jeweils nur an ihren Basisschenkeln miteinander verbunden sind. Während die U-förmigen Profilglieder durch den vollständigen Einschluss ihrer Öffnungen durch Sicken merklich versteift sind, erlauben die auf die Basisschenkel beschränkten Verbindungen ausreichende Biegeverformungen des Verstärkungsprofils in seiner Gesamtheit.

In einer weiteren bevorzugten Ausführungsform der Erfindung gehen die Öffnungen einschließende Sicken jeweils an einer Verzweigung in eine Sicke in einem U-Schenkel des U-förmigen Abschnitts über, wobei es sich bei der Verzweigung insbesondere um eine Y-förmige Verzweigung handelt. Durch Sicken auch in den U-Schenkeln lässt sich insbesondere die Spreizsteifigkeit des U-förmigen Verstärkungsprofils und damit die Klemmkraft eines U-förmigen Befestigungsabschnitts eines auf einen Karosserieflansch aufsteckbaren Dichtungsstrangs erhöhen.

In einer weiteren bevorzugten Ausführungsform der Erfindung weisen die Öffnungen einschließende Sicken benachbarter Basisschenkel jeweils einen gemeinsam Sickenabschnitt auf, wobei sich dieser Sickenabschnitt im Verbindungsbereich zwischen den U-förmigen Gliedern des Verstärkungsprofils erstreckt. Vorteilhaft wird durch solche gemeinsamen Sickenabschnitte die Beweglichkeit der U-förmigen Abschnitte des Verstärkungsprofils untereinander und damit die Biegeflexibilität des Verstärkungsprofils in seiner Gesamtheit erhöht.

Vorzugsweise gehen die rundum geschlossenen Sicken benachbarter Basisschenkel jeweils an einer Verzweigung, vorzugsweise an einer Y-förmigen Verzweigung, in den gemeinsamen Sickenabschnitt über.

In weiterer Ausgestaltung der Erfindung überlappen die rundum geschlossenen Öffnungen bildende Mittelabschnitte die Randeinschnitte, in Streifenlängsrichtung gesehen, wobei der Überlappungsbereich vorzugsweise mit einem Biegebereich zur Deckung kommt, in welchem die U-Schenkel von den Basisschenkeln abgebogen sind. Durch die Biegung im Überlappungsbereich können dort schräg verlaufende Sicken bei der Biegung problemlos verformt werden, ohne die Sickenwirkung zu beeinträchtigen.

Die genannten Sicken in den U-Schenkeln brauchen nicht bis an das freie Ende der U-Schenkel heranzureichen, sondern können im Abstand von diesem enden. Ein kurzes, sickenfreies Endstück kann die Steifigkeit der U-Schenkel in ihrer Gesamtheit kaum vermindern.

Die Erfindung ist nachfolgend anhand von Ausführungsbeispielen und der beiliegenden, sich auf diese Ausführungsbespiele beziehenden Zeichnungen weiter erläutert. Es zeigen:
- Fig. 1: einen zur Herstellung eines erfindungsgemäßen Verstärkungsprofils verwendbaren Blechstreifen mit Einschnitten,
- Fig. 2: den Blechstreifen von Fig. 1 im gestreckten Zustand,
- Fig. 3: den gestreckten Blechstreifen von Fig. 2 versehen mit Sicken,
- Fig. 4: eine geschnittene Detailansicht des gesickten Blechstreifens von Fig. 3, und
- Fig. 5: ein weiteres Ausführungsbeispiel für ein erfindungsgemäßes Verstärkungsprofil,
- Fig. 6: einen gestreckten Blechstreifen gemäß einem dritten Ausführungsbeispiel für die Erfindung, und
- Fig. 7: den Blechstreifen von Fig. 6 versehen mit Sicken.

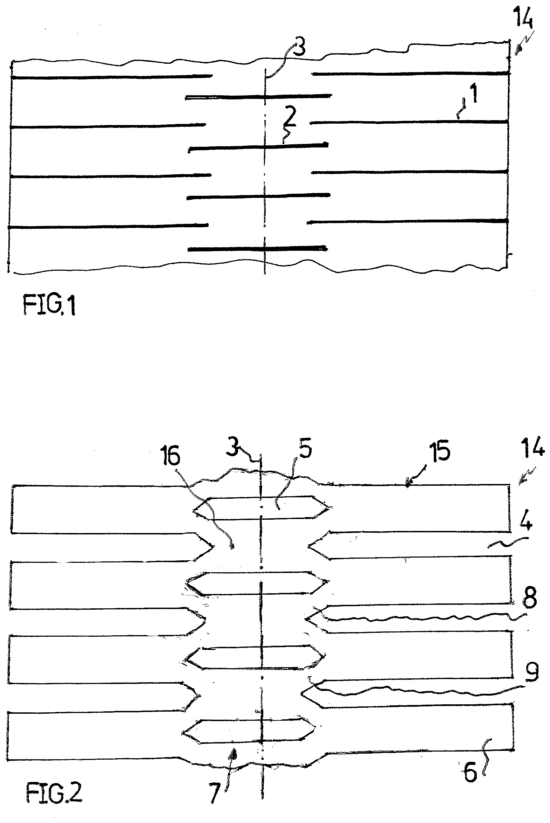

Ein in Fig. 1 gezeigter Stahlblechstreifen 14 für die Herstellung eines U-förmigen Verstärkungsprofils weist jeweils an einem Ende offene Randeinschnitte 1 sowie an beiden Enden geschlossene Mitteneinschnitte 2 auf. Die mit Hilfe (nicht gezeigter) Schneidwerkzeuge eingestanzten Einschnitte 1,2 sind in zueinander regelmäßigen Abständen symmetrisch zur einer Längsmittelachse 3 des Blechstreifens 14 angeordnet, wobei sie sich in dem gezeigten Beispiel senkrecht zur Längsmittelachse 3 erstrecken.

Wie Fig. 1 ferner zeigt, sind die Mitteneinschnitte 2 zu den Randeinschnitten 1 in Streifenlängsrichtung versetzt angeordnet, jeweils um den halben Abstand zwischen benachbarten Randeinschnitten 1 bzw. Mitteneinschnitten 2. In Streifenlängsrichtung gesehen überlappen sich die Mitteneinschnitte 2 und die Randeinschnitte 1 gegenseitig.

Fig. 2 zeigt den Blechstreifen 14 von Fig. 1, nachdem dieser entsprechend einem weiteren Bearbeitungsschritt zur Herstellung des U-förmigen Verstärkungsprofils gleichmäßig über seine gesamte Breite in Streifenlängsrichtung gestreckt wurde.

Bei der Streckung wurden die Randeinschnitte 1 und die Mitteneinschnitte 2 in Streifenlängsrichtung unter Bildung von länglichen Öffnungen 4 sowie rundum geschlossenen länglichen Öffnungen 5 aufgeweitet. Jeweils zwischen zwei benachbarten Öffnungen 4 befindet sich ein Abschnitt 15 zur Bildung eines U-förmigen Abschnitts mit U-Schenkeln 6 und einem jeweils eine der Öffnungen 5 aufweisenden Basisschenkel 7. Die U-Schenkel 6 gehen jeweils über zwei schräg verlaufende Stegabschnitte 8 und 9 in den Basisschenkel 7 über. Bei 16 sind die Abschnitte 15 jeweils an den Basisschenkeln 7 miteinander verbunden.

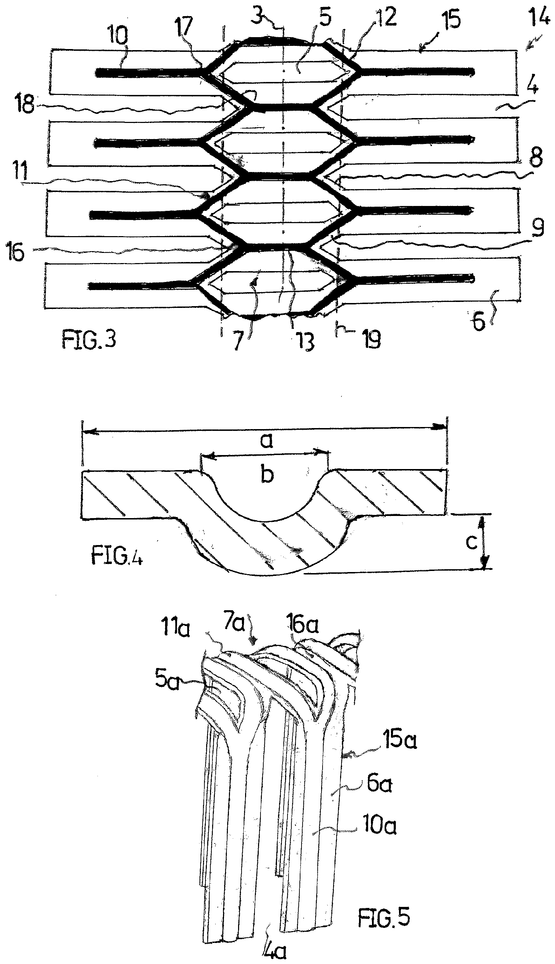

Fig. 3 zeigt den Blechstreifen von Fig. 2 nach einem weiteren Bearbeitungsschritt.

Wie Fig. 3 ferner erkennen lässt, ist in jeden der U-Schenkel 6 eine in der Mitte des U-Schenkels 6 parallel zu den Rändern der angrenzenden Öffnungen 4 verlaufende Sicke 10 eingebracht. In jedem der Basisschenkel 7 befindet sich eine Sicke 11 in Form eines geschlossenen, die längliche Öffnung 5 umgebenden Rings. Die Sicken 10 in den Basisschenkeln 6 sind über Y-förmige Verzweigungen 17 mit der ringförmig geschlossenen Sicke 11 in dem Basisschenkel 7 verbunden. Die Sicken 10 enden im Abstand vom freien Ende der U-Schenkel.

Die Sicken 11 umfassen neben Sickenabschnitten 12 in den schräg verlaufenden Stegabschnitten 8,9 jeweils mit benachbarten Sicken 11 gemeinsame Sickenabschnitte 13. Die Sickenabschnitte 13 verlaufen entlang der Verbindungen 16 zwischen den Abschnitten 15 des Verstärkungsprofils, wobei an jedem Ende der gemeinsamen Sickenabschnitte 13 jeweils eine Y-förmige Verzweigung 18 gebildet ist.

Fig. 4 zeigt einen der Stegabschnitte 8,9 im Querschnitt. In dem betreffenden Beispiel liegt bei einer Blechdicke von 0,35 mm die Stegbreite a bei 1,5 mm, die Sickenbreite b bei 0,5 mm und die Höhe c der durch die Sicke gebildeten Ausformung bei 0,25 mm.

Der gemäß Fig. 3 bearbeitete Blechstreifen 14 wird abschließend profiliert, indem eine Biegung um Biegeachsen erfolgt, die zur Längsmittelachse 3 parallel verlaufen. Die Biegebereiche sind durch Strichlinien 19 angedeutet. Die Biegung zu einem U-Profil erfolgt vor allem unter Biegung der Stegabschnitte 8,9, also in dem Bereich, in welchem sich, in Streifenlängsrichtung gesehen, die Einschnitte 1,2 überlappen.

Die beschriebenen Sicken 10,11 erlauben es, zur Herstellung von Verstärkungsprofilen bei gleichbleibenden Steifigkeits- und Flexibilitätseigenschaften dünneres Blechmaterial einzusetzen und dadurch Gewicht und Material einzusparen. Durch Abbiegung der U-Schenkel 6 im Überlappungsbereich der Rand- und Mitteneinschnitte 1,2, und damit auch im Überlappungsbereich der durch die Streckung der Einschnitte gebildeten Öffnungen 4,5, werden die im Biegebereich schräg verlaufenden Sickenabschnitte 12 durch die Biegung kaum abgeplattet. Die Spreizsteifigkeit des U-Profils bleibt erhalten.

In dem beschriebenen Ausführungsbeispiel weisen die Sicken einen in Längsrichtung konstanten Sickenquerschnitt auf. Abweichend hiervon kann sich der Querschnitt in Längsrichtung ändern, insbesondere derart, dass im Biegebereich eine Abplattung der Sicken verhindert wird.

In den folgenden Figuren sind gleiche oder gleichwirkende Teile mit derselben Bezugszahl wie in den vorangehenden Figuren bezeichnet, wobei der betreffenden Bezugszahl der Buchstabe a bzw. b beigefügt ist.

Fig. 5 zeigt ein komplett profiliertes Verstärkungsprofil, dass sich von dem vorangehend beschriebenen Profil dadurch unterscheidet, dass die Basisschenkelabschnitte 7a nur ringförmig geschlossene Sicken 11a aufweisen, die keinen, mit benachbarten Sicken 11a gemeinsamen Sickenabschnitt aufweisen. Die Verbindungen 16a zwischen den U-förmigen Abschnitten 15a des Verstärkungsprofils liegen jeweils zwischen den Sicken 11a.

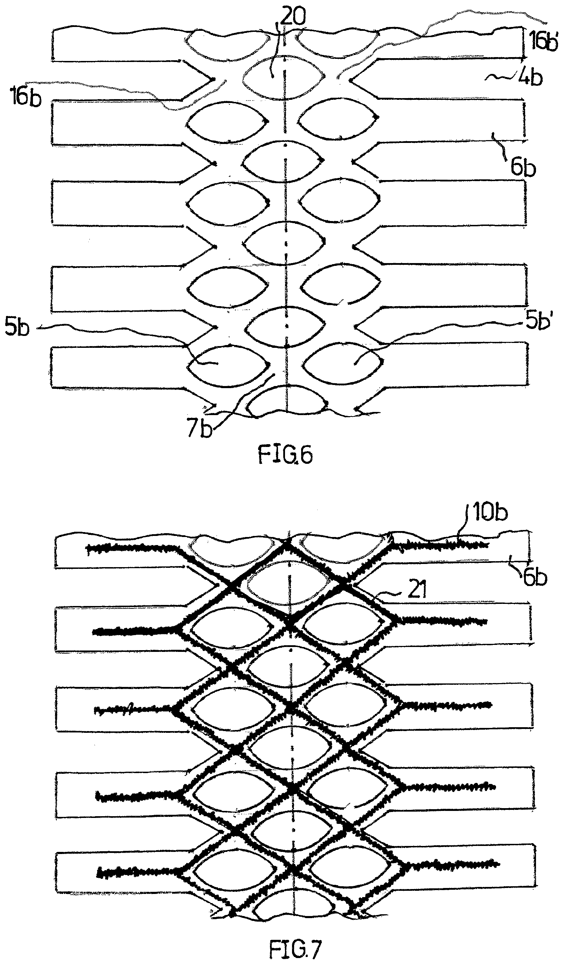

Ein in Fig. 6 gezeigter Blechstreifen zur Bildung eines Verstärkungsprofils weist durch gestreckte Randeinschnitte gebildete Öffnungen 4b auf, welche Abschnitte 15b für die Bildung U-förmiger Abschnitte mit U-Schenkeln 6b und einem Basisschenkel 7b voneinander trennen.

Jeder der Basisschenkel 7b weist zwei längliche Öffnungen 5b und 5b' auf, deren Längsachsen zu den Längsachsen der U-Schenkel 6b ausgerichtet sind. Die Abschnitte 15b sind bei 16b und 16b' miteinander verbunden, wobei zwischen den Verbindungen 16b, 16b' jeweils eine längliche, die Abschnitte 15b zusätzlich zu den Öffnungen 4b voneinander trennende Öffnung 20 angeordnet ist.

Wie Fig. 7 erkennen lässt, gehen in den U-Schenkeln 6b gebildete Sicken 10b in ein Rautenmuster von Ringsicken 21 über, welche die Öffnungen 5b,5b' und 20 jeweils vollständig umschließen.

Fig. 5 lässt erkennen, dass sich die Sicken 10a, 11a bezogen auf die U-Form des Verstärkungsprofils nach außen auswölben.

Es hat sich herausgestellt, dass sich mit U-förmigen Verstärkungsprofilen, bei denen sich die Sicken bezogen auf das U-Profil umgekehrt nach innen auswölben, deutlich größere Haltekräfte von Dichtungssträngen an Karosserieflanschen erzielen lassen. Durch Abbiegung vorab gesickter ebener Blechstreifen in die U-Form tritt in diesem Fall in höherem Grade eine Kaltverfestigung als bei der in Fig. 5 gezeigten Ausführungsform ein.

Während es möglich ist, die Sicken einzubringen, nachdem durch Strecken des geschlitzten Blechstreifens bereits durch Aufweitung der Schlitze die Öffnungen gebildet sind, ggf. sogar nachdem der Blechstreifen bereits zu einem U-Profil gebogen worden ist, kann die Herstellung des Verstärkungsprofils auch mit der Erzeugung der Sicken beginnen. Erst danach werden Einschlitzungen gebildet und der Blechstreifen gereckt. Schließlich könnten die Sicken auch nach der Bildung der Einschlitzungen und vor der Streckung erzeugt werden. Auch eine gleichzeitige Erzeugung von Sicken und Schlitzen wäre möglich, z.B. mit Hilfe eines einzigen Werkzeugs.

Die verhältnismäßig langwierige Bearbeitung des Blechstreifens kann in einem Zuge mit der Extrusion eines Dichtungsprofils erfolgen, d.h. der bearbeitete, zu dem Verstärkungsprofil verformte Blechstreifen wird unmittelbar nach der Bearbeitung einer Extrusionseinrichtung zur Einbettung in den Dichtungsstrang zugeführt.

## Patentansprüche

1. Verstärkungsprofil zur Einbettung in einen Elastomerstrang, insbesondere Dichtungs- oder Kantenschutzstrang, wobei das Verstärkungsprofil durch einen unter Aufweitung regelmäßig wiederkehrender Einschnitte (1,2) gestreckten und unter Profilierung und Einbringung von Sicken umgeformten Blechstreifen (14) gebildet ist,
**dadurch gekennzeichnet,**
**dass** durch die Aufweitung der Einschnitte (1,2) gebildete, einen geschlossenen Rand aufweisende Öffnungen (5) jeweils vollständig durch Sicken (11) eingeschlossen sind.

2. Verstärkungsprofil nach Anspruch 1,
**dadurch gekennzeichnet,**
**dass** die rundum geschlossenen Öffnungen (5) jeweils in einem Basisschenkel (7) U-förmiger, durch aufgeweitete Randeinschnitte (1) getrennte Abschnitte (15) des Verstärkungsprofils gebildet sind.

3. Verstärkungsprofil nach Anspruch 2,
**dadurch gekennzeichnet,**
**dass** die rundum geschlossenen Öffnungen (5) einschließende Sicken (11) jeweils an einer Verzweigung (17) in eine Sicke (10) in einem U-Schenkel (6) des U-förmigen Abschnitts (15) übergehen.

4. Verstärkungsprofil nach einem der Ansprüche 1 bis 3,
**dadurch gekennzeichnet,**
**dass** die Verzweigung (17) eine Y-förmige Verzweigung ist.

5. Verstärkungsprofil nach einem der Ansprüche 2 bis 4,
**dadurch gekennzeichnet,**
**dass** die rundum geschlossenen Öffnungen (5) einschließende Sicken (11) benachbarter Basisschenkel (7) jeweils einen gemeinsamen Sickenabschnitt (13) aufweisen.

6. Verstärkungsprofil nach Anspruch 5,
**dadurch gekennzeichnet,**
**dass** die Sicken (11) benachbarter Basisschenkel (7) jeweils an Y-förmigen Verzweigungen (18) ineinander übergehen.

7. Verstärkungsprofil nach einem der Ansprüche 1 bis 6,
**dadurch gekennzeichnet,**
**dass** die rundum geschlossenen Öffnungen (5) bildende Mitteneinschnitte (2) die Randeinschnitte (1), in Streifenlängsrichtung gesehen, überlappen.

8. Verstärkungsprofil nach Anspruch 7,
**dadurch gekennzeichnet,**
**dass** der Überlappungsbereich mit einem Biegebereich zur Deckung kommt, in welchem die U-Schenkel (6) von den Basisschenkeln (7) abgebogen sind.

9. Verstärkungsprofil nach einem der Ansprüche 3 bis 8,
**dadurch gekennzeichnet,**
**dass** die Sicke (10) in dem U-Schenkel (6) jeweils im Abstand vom oder am freien Ende des U-Schenkels (6) endet.

10. Verstärkungsprofil nach einem der Ansprüche 1 bis 9,
**dadurch gekennzeichnet,**
**dass** die Sicken (10,11) ein sich in Sickenlängsrichtung veränderndes Querschnittsprofil aufweisen.

11. Verstärkungsprofil nach einem der Ansprüche 1 bis 10,
**dadurch gekennzeichnet,**
**dass** sich, bezogen auf eine U-Form des Verstärkungsprofils nach außen auswölbende Sicken (10,11) oder/und nach innen auswölbende Sicken vorgesehen sind.

12. Verfahren zur Herstellung eines Verstärkungsprofils für die Einbettung in das Elastomermaterial eines Dichtungs- oder Kantenschutzstrangs, bei dem in einem Blechstreifen (14) Einschnitte (1,2) gebildet werden, der mit den Einschnitten (1,2) versehene Blechstreifen (14) unter Aufweitung der Einschnitte (1,2) in Streifenlängsrichtung gestreckt und der gestreckte Blechstreifen (14) durch Biegung um zur Streifenlängsachse parallele Biegeachsen profiliert wird,
**dadurch gekennzeichnet,**
**dass** durch die Aufweitung der Einschnitte (1,2) gebildete, einen geschlossenen Rand aufweisende Öffnungen (5) jeweils vollständig durch Sicken (11) eingeschlossen werden.

13. Verfahren nach Anspruch 12,
**dadurch gekennzeichnet,**
**dass** die Sicken vor der Bildung der Einschnitte (1,2), nach der Bildung der Einschnitte und vor der Streckung oder nach der Streckung in den Blechstreifen (14) eingebracht werden.

14. Verfahren nach Anspruch 12 oder 13,
**dadurch gekennzeichnet,**
**dass** das Verstärkungsprofil unmittelbar nach der Bearbeitung des Blechstreifens (14) einer Extrusionseinrichtung zur Herstellung eines das Verstärkungsprofil enthaltenden Elastomerstrangs zugeführt wird.

## Claims

1. Reinforcing profile for embedding in an elastomer strip, in particular a sealing or edge protection strip, the reinforcing profile being formed by a sheet metal strip (14) which is extended by expanding regularly repeating incisions (1, 2) with profiling and introducing beads,
**characterized in that**
openings (5) formed by the expansion of the incisions (1, 2) and having a closed edge are each enclosed completely by beads (11).

2. Reinforcing profile according to Claim 1,
**characterized in that**
the openings (5) that are closed all round are each formed in a base leg (7) of U-shaped sections (15) of the reinforcing profile that are separated by expanded edge incisions (1).

3. Reinforcing profile according to Claim 2,
**characterized in that**
the beads (11) enclosing openings (5) that are closed all round each merge at a branch (17) into a bead (10) in a U-leg (6) of the U-shaped section (15).

4. Reinforcing profile according to one of Claims 1 to 3,
**characterized in that**
the branch (17) is a Y-shaped branch.

5. Reinforcing profile according to one of Claims 2 to 4,
**characterized in that**
the beads (11) of adjacent base legs (7) which enclose the openings (5) that are closed all round each have a common bead section (13).

6. Reinforcing profile according to Claim 5,
**characterized in that**
the beads (11) of adjacent base legs (7) each merge into one another at Y-shaped branches (18).

7. Reinforcing profile according to one of Claims 1 to 6,
**characterized in that**
the central sections (2) that form the openings (5) that are closed all round overlap the edge incisions (1), seen in the strip longitudinal direction.

8. Reinforcing profile according to Claim 7,
**characterized in that**
the overlapping region coincides with a bending region, in which the U-legs (6) are bent from the base legs (7).

9. Reinforcing profile according to one of Claims 3 to 8,
**characterized in that**
the bead (10) in the U-leg (6) each ends at a distance from or at the free end of the U-leg (6).

10. Reinforcing profile according to one of Claims 1 to 9,
**characterized in that**
the beads (10, 11) have a cross-sectional profile that changes in the bead longitudinal direction.

11. Reinforcing profile according to one of Claims 1 to 10,
**characterized in that**
relative to a U-shape of the reinforcing profile, beads (10, 11) that curve outward and/or curve inwards are provided.

12. Method for producing a reinforcing profile for embedding in the elastomer material of a sealing or edge protection strip, in which incisions (1, 2) are formed in a sheet metal strip (14), the sheet metal strip (14) provided with the incisions (1, 2) is extended, expanding the incisions (1, 2) in the strip longitudinal direction, and the extended sheet metal strip (14) is profiled by bending around bending axes parallel to the strip longitudinal axis,
**characterized in that**
openings (5) formed by the expansion of the incisions (1, 2) and having a closed edge are each enclosed completely by beads (11).

13. Method according to Claim 12,
**characterized in that**
the beads are introduced into the sheet metal strip (14) before the formation of the incisions (1, 2), after the formation of the incisions and before the extension or after the extension.

14. Method according to Claim 12 or 13,
**characterized in that**
immediately after the processing of the sheet metal strip (14), the reinforcing profile is fed to an extrusion apparatus for producing an elastomer strip containing the reinforcing profile.

## Revendications

1. Profilé de renforcement pour être incorporé dans un brin d'élastomère, en particulier un brin d'étanchéité ou de protection de bords, le profilé de renforcement étant formé d'une bande de tôle (14) étirée avec élargissement d'encoches (1,2) régulièrement récurrentes et façonnée avec profilage et introduction de nervures, **caractérisé en ce que** les ouvertures (5) formées par élargissement des encoches (1,2), présentant un bord fermé, sont à chaque fois complètement renfermées par des nervures (11).

2. Profilé de renforcement selon la revendication 1, **caractérisé en ce que** les ouvertures (5) fermées tout autour sont à chaque fois formées dans une branche de base (7) de sections (15) en forme de U, séparées par des encoches de bord (1) élargies du profilé de renforcement.

3. Profilé de renforcement selon la revendication 2, **caractérisé en ce que** les nervures (11) renfermant les ouvertures (5) fermées tout autour se transforment à chaque fois, au niveau d'une ramification (17) dans une nervure (10), en une branche en U (6) de la section (15) en forme de U.

4. Profilé de renforcement selon l'une quelconque des revendications 1 à 3, **caractérisé en ce que** la ramification (17) est une ramification en forme de Y.

5. Profilé de renforcement selon l'une quelconque des revendications 2 à 4, **caractérisé en ce que** les nervures (11), renfermant les ouvertures (5) fermées tout autour, de branches de base adjacentes (7) présentent à chaque fois une section de nervure commune (13).

6. Profilé de renforcement selon la revendication 5, **caractérisé en ce que** les nervures (11) de branches de base adjacentes (7) passent à chaque fois l'une dans l'autre au niveau de ramifications en forme de Y (18).

7. Profilé de renforcement selon l'une quelconque des revendications 1 à 6, **caractérisé en ce que** les encoches centrales (2) formant les ouvertures (5) fermées tout autour chevauchent les encoches de bord (1), vues dans la direction longitudinale de la bande.

8. Profilé de renforcement selon la revendication 7, **caractérisé en ce que** la zone de chevauchement couvre une zone de cintrage dans laquelle les branches en U (6) des branches de base (7) sont coudées.

9. Profilé de renforcement selon l'une quelconque des revendications 3 à 8, **caractérisé en ce que** la nervure (10) dans la branche en U (6) se termine à chaque fois à une certaine distance ou au niveau de l'extrémité libre de la branche en U (6).

10. Profilé de renforcement selon l'une quelconque des revendications 1 à 9, **caractérisé en ce que** les nervures (10,11) présentent un profil transversal qui se modifie dans la direction longitudinale des nervures.

11. Profilé de renforcement selon l'une quelconque des revendications 1 à 10, **caractérisé en ce que** des nervures (10,11) incurvées vers l'intérieur et/ou incurvées vers l'extérieur par rapport à une forme de U du profilé de renforcement sont prévues.

12. Procédé pour la fabrication d'un profilé de renforcement pour l'incorporation dans le matériau élastomère d'un brin d'étanchéité ou de protection de bords, dans lequel des encoches (1,2) sont formées dans une bande en tôle (14), la bande en tôle (14) pourvue des encoches (1,2) est étirée dans la direction longitudinale de la bande avec élargissement des encoches (1,2) et la bande en tôle étirée (14) est profilée par cintrage autour d'axes de cintrage parallèles à l'axe longitudinal de la bande, **caractérisé en ce que** les ouvertures (5) formées par élargissement des encoches (1,2), présentant un bord fermé, sont à chaque fois complètement renfermées par des nervures (11).

13. Procédé selon la revendication 12, **caractérisé en ce que** les nervures sont introduites dans la bande en tôle (14) avant la formation des encoches (1,2), après la formation des encoches et avant l'étirage ou après l'étirage.

14. Procédé selon la revendication 12 ou 13, **caractérisé en ce que** le profilé de renforcement est introduit directement après le façonnage de la bande en tôle (14) dans un dispositif d'extrusion pour la fabrication d'un brin d'élastomère contenant le profilé de renforcement.
